# EUROPÄISCHE PATENTSCHRIFT

(11) **EP 4 069 989 B1**
(45) Veröffentlichungstag und Bekanntmachung des Hinweises auf die Patenterteilung: **20.08.2025**
(21) Anmeldenummer: 20845380.3
(22) Anmeldetag: 02.12.2020
(51) Int. Cl.: F16D 41/07

(54) **KLEMMKÖRPERFREILAUFEINHEIT UND ANTRIEBSVORRICHTUNG FÜR EIN ELEKTROFAHRRAD MIT KLEMMKÖRPERFREILAUFEINHEIT**
CLAMPING BODY FREEWHEEL UNIT AND DRIVE DEVICE FOR AN ELECTRIC BICYCLE HAVING A CLAMPING BODY FREEWHEEL UNIT
UNITÉ DE ROUE LIBRE DE CORPS DE SERRAGE ET DISPOSITIF D'ENTRAÎNEMENT POUR UNE BICYCLETTE ÉLECTRIQUE AYANT UNE UNITÉ DE ROUE LIBRE DE CORPS DE SERRAGE

(30) Priorität: 03.12.2019 DE 102019218785
(43) Veröffentlichungstag der Anmeldung: 12.10.2022
(73) Patentinhaber: GMN Paul Müller Industries GmbH & Co. KG, 90411 Nürnberg (DE)
(72) Erfinder: ELBACHER, Manfred, 90411 Nürnberg (DE); RADKE, Andreas, 90427 Nürnberg (DE); WEIGEL, Christfried, 13599 Berlin (DE); NOACK, Ulrich, 10405 Berlin (DE)
(74) Vertreter: Lösch, Christoph Ludwig Klaus
(86) Internationale Anmeldenummer: PCT/DE2020/101019
(87) Internationale Veröffentlichungsnummer: WO 2021/110214

(56) Entgegenhaltungen:
- DE-U1- 9 014 391
- DE-U1- 9 014 391
- US-A- 5 664 653
- US-A- 5 664 653
- US-A1- 2015 252 844
- US-A1- 2015 252 844

## Beschreibung

Die vorgeschlagene Lösung betrifft eine Klemmkörperfreilaufeinheit mit mehreren Klemmkörpern, einem Käfig, über den die mehreren Klemmkörper entlang einer Umfangsrichtung in einem definierten Abstand zueinander gehalten sind und mehreren Wälzkörpern für die drehbare Lagerung zweier über die Klemmkörperfreilaufeinheit miteinander gekoppelter Wellen.

Klemmkörperfreilaufeinheiten sind weithin bekannt. Mehrere Klemmkörper dienen hierbei einer Kraftübertragung nur in einer von zwei zueinander entgegengesetzten Drehrichtungen zwischen inneren und einer äußeren Bauteile, insbesondere inneren oder äußeren Wellen, die über die Klemmkörperfreilaufeinheit miteinander gekoppelt werden können. Derart kann bei Drehung in die eine Drehrichtung eine Kraftübertragung erfolgen, während über die Klemmkörperfreilaufeinheit in der entgegengesetzten Drehrichtung eine Drehung der Bauteile relativ zueinander ermöglicht ist. Die Klemmkörper sind hierbei in einem Käfig der Klemmkörperfreilaufeinheit entlang einer Umfangsrichtung um eine durch die Klemmkörperfreilaufeinheit definierten Drehachse in definierten Abständen zueinander gehalten und hierbei jeweils um eine senkrecht zur Umfangsrichtung verlaufende Kippachse kippbar, sodass je nach Drehrichtung über die Klemmkörper ein Drehmoment kraftschlüssig übertragen wird oder nicht.

Es ist bekannt, für die drehbare Lagerung gerade bei größeren Drehmomenten zusätzlich zu den mehreren Klemmkörpern einer Klemmkörperfreilaufeinheit auch Wälzkörper vorzusehen, über die miteinander zu koppelnde Bauteil drehbar zueinander gelagert werden. Beispielsweise liegen die Wälzkörper zwischen einem Innenring der Klemmkörperfreilaufeinheit und einem Außenring der Klemmkörperfreilaufeinheit vor oder unmittelbar an den miteinander zu koppelnden Bauteilen. Beispielweise kann ein Innenring mit einer inneren Welle verbindbar sein, während ein Außenring mit einer äußeren Welle verbindbar ist. Sind die Wälzkörper in der Klemmkörperfreilaufeinheit integriert, wird hierfür typischerweise ein separater Käfig vorgesehen, um die drehbaren Wälzkörper in einem definierten Abstand zueinander zu halten. Alternativ wird ein Käfig für die Wälzkörper ausgespart, insbesondere wenn die Wälzkörper nadelförmig ausgebildet sind.

US 2015/252844 A1 beschreibt ein Lager mit mehreren Klemmkörpern und mehreren Wälzkörpern. Die Klemmkörper und die Wälzlager sind jeweils in einer oder mehreren Reihen angeordnet und werden in einem gemeinsamen Käfig gehalten. DE 90 14 391 U1 beschreibt eine Welle-Nabe-Verbindung, die ebenfalls mehrere Klemmkörper und mehrere Wälzkörper aufweist, die in einem gemeinsamen Käfig gehalten sind.

Gerade mit Blick auf die Verwendung eines Klemmkörperfreilaufs in einem Elektrofahrrad und die hier vorzusehenden Toleranzen zwischen zwei miteinander zu koppelnden Bauteilen, wie einer inneren Welle und einer äußeren Wellen, sowie den beengten Bauraumverhältnissen besteht weiterhin Bedarf nach verbesserten Klemmkörperfreiläufen.

Vor diesem Hintergrund ist eine Klemmkörperfreilaufeinheit des Anspruchs 1 vorgeschlagen, bei der zumindest ein Teil mehrerer Wälzkörper der Klemmkörperfreilaufeinheit und die Klemmkörper der Klemmkörperfreilaufeinheit gemeinsam an einem Käfig gehalten sind.

Die vorgeschlagene Lösung geht somit von dem Grundgedanken aus, einen gemeinsamen Käfig sowohl für Klemmkörper als auch für zusätzliche Wälzkörper vorzusehen. An dem einen gemeinsamen Käfig sind dann folglich unterschiedliche Typen von Käfigaufnahmen einerseits für die Klemmkörper und andererseits für die Wälzkörper ausgebildet. Eine vorgeschlagene Klemmkörperfreilaufeinheit umfasst somit zusätzlich zu Klemmkörpern mehrere Wälzkörper, die sich für die drehbare Lagerung einer inneren und einer äußeren Welle relativ zueinander eignen, wenn diese inneren und äußeren Wellen über die Klemmkörperfreilaufeinheit miteinander gekoppelt sind. Hierbei sind die zusätzlichen Wälzkörper an dem Käfig für die Klemmkörper drehbar gehalten.

Über die vorgeschlagene Integration von Wälzkörpern und Klemmkörpern an einem gemeinsamen Käfig sind kleinere Bauformen eines Klemmkörperfreilaufs möglich. Auch können die Kosten für die Klemmkörper erheblich reduziert werden, da in der Praxis eine größere Toleranzbreite akzeptabel wird und zusätzliche Sicherheiten in der Tolerierung nicht mehr vorgehalten werden müssen. Auch kann die Montage vereinfacht werden. Es hat sich ferner gezeigt, dass durch die eine vorgeschlagene Klemmkörperfreilaufeinheit die Robustheit gegenüber einem maximalen Drehmoment erhöht werden kann sowie ein Schleppmoment in einem Freilauf reduziert werden kann.

Die vorgeschlagene Klemmkörperfreilaufeinheit kann hierbei für die Kopplung einer inneren Welle und einer äußeren Welle einen Innenring und/oder einen Außenring aufweisen, an dem jeweils die Klemmkörper und die Wälzkörper außenseitig respektive innenseitig anliegen. Dies ist jedoch nicht zwingend. Insbesondere kann die Klemmkörperfreilaufeinheit ohne Innenring und/oder ohne Außenring ausgebildet sein, sodass eine jeweilige Welle unmittelbar in Kontakt mit den Klemmkörpern und/oder Wälzkörpern steht.

Insbesondere kann eine Ausführungsvariante einer vorgeschlagenen Klemmkörperfreilaufeinheit für die Verwendung in einer motorischen Antriebsvorrichtung für ein Elektrofahrrad (mithin für ein E-Bike oder Pedelec) eingerichtet und vorgesehen sein. Über die Klemmkörperfreilaufeinheit ist dann beispielsweise bei einer (motorisch angetriebenen) Drehung einer ersten, äußeren oder inneren Welle in eine erste Drehrichtung eine Kraft an eine andere zweite, innere oder äußere Welle übertragbar, um die andere, zweite Welle anzutreiben. Gleichzeitig ist über die Klemmkörperfreilaufeinheit die andere, zweite antreibbare Welle auch in die erste Drehrichtung drehbar, sodass hierbei die eine erste antreibende Welle überholt werden kann. Ferner ist über die Klemmkörperfreilaufeinheit die zweite antreibbare Welle auch ohne Drehung der ersten antreibenden Welle drehbar. Derart kann die Klemmkörperfreilaufeinheit insbesondere eingerichtet und vorgesehen sein, an einem Elektrofahrrad mindestens einen Antriebsmotor der motorischen Antriebsvorrichtung von einer Abtriebswelle zu entkoppeln, sodass ein an der Abtriebswelle durch einen Fahrer des Elektrofahrrads aufgebrachtes Drehmoment nicht an den Antriebsmotor übertragbar ist und über die Klemmkörperfreilaufeinheit ein Kraftfluss in Richtung des Antriebsmotors unterbrochen wird. Auf diese Art und Weise kann bei einem Elektrofahrrad über die Klemmkörperfreilaufeinheit eine motorische Antriebsvorrichtung von einem muskelkraftbetätigten Pedalantrieb des Elektrofahrrads entkoppelt werden, sodass ein Fahrer des Elektrofahrrads bei inaktiver elektromotorischer Antriebsvorrichtung (d.h. ohne Motorunterstützung) das Elektrofahrrad ohne einen entgegenwirkenden Widerstand durch den mindestens einen Antriebsmotor und/oder ein Getriebe der motorischen Antriebsvorrichtung muskelkraftbetätigt antreiben kann.

In einer Ausführungsvariante sind mehrere Wälzkörper der Klemmkörperfreilaufeinheit in einer sich entlang der Umfangsrichtung erstreckenden ersten Lagerreihe angeordnet, die zu einer zweiten Lagerreihe der Klemmkörperfreilaufeinheit mit mehreren (an ein und demselben Käfig gehaltenen) Klemmkörpern parallel verläuft. Die ersten und zweiten Lagereihen sind somit bezogen auf eine durch die Klemmkörperfreilaufeinheit definierte Drehachse axial zueinander versetzt angeordnet.

In einer Ausführungsvariante sind mehrere Wälzkörper in einer sich entlang der Umfangsrichtung erstreckenden Lagerreihe der Klemmkörperfreilaufeinheit zusammen mit mehreren Klemmkörpern angeordnet. Entlang der Umfangsrichtung folgen somit innerhalb dieser Lagerreihe mehrere Wälzkörper und mehrere Klemmkörper aufeinander. Eine derartige Ausführungsvariante schließt hierbei insbesondere ein, dass neben einer derartigen (gemischten) Lagerreihe mit Wälzkörpern und Klemmkörpern auch eine weitere Lagerreihe an der Klemmkörperfreilaufeinheit vorhanden sein kann, wobei diese weitere Lagerreihe Wälzkörper und Klemmkörper gemischt, nur Wälzkörper oder nur Klemmkörper enthalten kann.

In einer Ausführungsvariante folgen in der Lagereihe mit mehreren Wälzkörpern und mehreren Klemmkörpern mindestens zwei Klemmkörper entlang der Umfangsrichtung unmittelbar aufeinander, bevor in der Umfangsrichtung wenigstens ein Wälzkörper auf einen der mindestens zwei Klemmkörper folgt. In einer hierauf basierenden Variante sind dann typischerweise mehr Klemmkörper als Wälzkörper in der Lagereihe vorgesehen, um für die Kraftübertragung über die Klemmkörper ein größeres Drehmoment übertragen zu können.

Erfindungsgemäß umfasst die Klemmkörperfreilaufeinheit mindestens zwei jeweils mehrere Klemmkörper aufweisende Lagerreihen, die entlang einer durch die Klemmkörperfreilaufeinheit definierten Drehachse nebeneinander liegen. Erfindungsgemäß umfasst die Klemmkörperfreilaufeinheit drei Lagerreihen, die entlang der Drehachse nebeneinander liegen. Hierbei weisen zwei Lagerreihen jeweils mehrere Klemmkörper (und zwar ausschließlich Klemmkörper oder gemischt mit mehreren Wälzkörpern) auf, während und eine Lagerreihe ausschließlich mehrere Wälzkörper aufweist. In einer entsprechenden Ausführungsvariante einer dreireihigen Klemmkörperfreilaufeinheit ist somit wenigstens eine Lagerreihe vorgesehen, die ausschließlich Wälzkörper umfasst, deren Wälzkörper aber an ein und demselben Käfig drehbar gehalten sind wie die Klemmkörper eines oder aller anderen Lagerreihen.

In einer Ausführungsvariante einer dreireihigen Klemmkörperfreilaufeinheit bildet der Käfig zwischen einer der Lagerreihen mit mehreren Klemmkörpern und der ausschließlich mehrere Wälzkörper aufweisenden Lagerreihe einen sich bezüglich der Drehachse radial nach außen erstreckenden Steg aus. Über diesen sich radial nach außen erstreckenden Steg sind dann die unterschiedlichen Lagerreihen nicht nur funktional, sondern auch strukturell voreinander an der Klemmkörperfreilaufeinheit getrennt.

In zwei jeweils Klemmkörper aufweisenden Lagerreihen können grundsätzlich über die Lagerreihen hinweg unverbundene Klemmkörper vorgesehen sein.

Erfindungsgemäß sind die Klemmkörper zweier benachbarter Lagerreihen miteinander verbunden, insbesondere einstückig miteinander ausgebildet und bilden derart eine einzelne Klemmkörperreihe. Beispielsweise weisen die Klemmkörper einer Klemmkörpereiehe an einer radial innen liegenden Seite eine gemeinsame Basis auf und sind erfindungsgemäß durch einen um die Drehachse umlaufenden Schlitz an einer radial außen liegenden Seite lokal voneinander separiert. Durch den über den Umfang umlaufenden Schlitz ist somit eine Klemmkörperreihe mit zwei Lagerreihen gebildet, bei denen eine Reihe von in Umfangsrichtung hintereinander liegenden Klemmkörpern vorhanden, die jeweils über eine gemeinsame Basis Kräfte an die innere Welle übertragen können.

Die vorgeschlagene Lösung schließt somit insbesondere Ausführungsvarianten einer Klemmkörperfreilaufeinheit ein, bei denen an einem Käfig neben einer nur Wälzköper enthaltenen Reihe (Wälzkörperreihe) zusätzlich wenigstens eine Reihe in Umfangsrichtung aufeinanderfolgender, z.B. jeweils geschlitzter oder ungeschlitzter, Klemmkörper (Klemmkörperreihe) vorgesehen ist. Ferner sind Ausführungsvarianten eingeschlossen, bei denen durch Anordnung von jeweils zwei in axialer Richtung hintereinander liegenden Wälzköpern in Lücken zwischen in Umfangsrichtung aufeinanderfolgender Klemmkörper einer Klemmkörperreihe zwei jeweils Wälzkörper und Klemmkörper aufweisende Lagerreihen gebildet und an einem Käfig vorgesehen sind.

Zur zusätzlichen Funktionsintegration ist in einer Ausführungsvariante an dem Käfig mindestens eine Dichtung vorgesehen. Diese Dichtung ist dann beispielsweise an den Käfig angespritzt.

Beispielsweise ist die Dichtung an einem, bezüglich einer durch die Klemmkörperfreilaufeinheit definierten Drehachse, axialen Stirnseite des Käfigs vorgesehen. Die damit an einer Stirnseite des Käfigs integrierte, insbesondere angespritzte Dichtung erlaubt dann mit dem Einbau der Klemmkörperfreilaufeinheit eine Abdichtung, zum Beispiel an einer Antriebsvorrichtung für ein Elektrofahrrad, gegenüber der Umgebung.

Beispielsweise bildet die an dem Käfig vorgesehene, insbesondere angespritzte Dichtung mindestens eine Dichtlippe aus.

In einer Ausführungsvariante ist zumindest ein Teil der Wälzkörper als Zylinderrollen ausgebildet.

Die vorgeschlagene Lösung betrifft ferner eine Antriebsvorrichtung für ein Elektrofahrrad mit mindestens einer vorgeschlagenen Klemmkörperfreilaufeinheit. Die Antriebsvorrichtung ist folglich beispielsweise für ein motorisches Antreiben eines Elektrofahrrades eingerichtet und vorgesehen und weist zur Bereitstellung eines Klemmkörperfreilaufs mindestens eine Ausführungsvariante einer vorgeschlagenen Klemmkörperfreilaufeinheit auf.

In einer Ausführungsvariante umfasst die Antriebsvorrichtung mindestens einen Antriebsmotor und ein Getriebe, um ein von dem mindestens einen Antriebsmotor erzeugtes Antriebsmoment (über das Getriebe) an eine Abtriebswelle zu übertragen. Bei der Abtriebswelle kann es sich beispielsweise um eine Tretlagerwelle für das Elektrofahrrad handeln. Über die Klemmkörperfreilaufeinheit sind dann der mindestens eine Antriebsmotor und das Getriebe und/oder das Getriebe und die Abtriebswelle voneinander entkoppelbar. Derart ist über die Klemmkörperfreilaufeinheit folglich ein Kraftfluss in Richtung des Antriebsmotors unterbrochen, sodass bei einem muskelkraftbetätigten Antreiben des Elektrofahrrads die motorische Antriebsvorrichtung und insbesondere deren mindestens einer Antriebsmotor nicht "mitgeschleppt" werden muss.

Des Weiteren umfasst die vorgeschlagene Lösung ein Elektrofahrrad mit mindestens einer vorgeschlagenen Klemmkörperfreilaufeinheit und/oder einer vorgeschlagenen Antriebsvorrichtung.

Die beigefügten Figuren veranschaulichen exemplarisch mögliche Ausführungsvarianten der vorgeschlagenen Lösung.

Hierbei zeigen:
- Figur 1: in perspektivischer Ansicht eine erste Ausführungsvariante einer vorgeschlagenen Klemmkörperfreilaufeinheit mit drei Lagerreihen, deren Klemmkörper und Wälzkörper an einem einzigen gemeinsamen Käfig der Klemmkörperfreilaufeinheit gehalten sind;
- Figur 2: in perspektivischer Ansicht eine weitere Ausführungsvariante der vorgeschlagenen Klemmkörperfreilaufeinheit mit zwei axial nebeneinander liegenden gemischten Lagerreihen, die jeweils Klemmkörper und Wälzkörper an einem gemeinsamen Käfig aufweisen;
- Figur 3: schematisch eine Ausführungsvariante eines Elektrofahrrades, bei dem Ausführungsvarianten der vorgeschlagenen Lösung Verwendung finden.

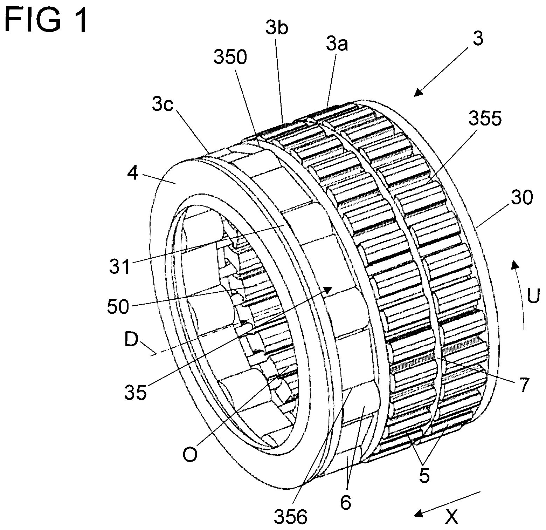

Die Figur 1 zeigt in perspektivischer Ansicht eine erste Ausführungsvariante einer vorgeschlagenen Klemmkörperfreilaufeinheit 3. Die Klemmkörperfreilaufeinheit 3 der Figur 1 ist dreireihig, d.h. mit drei Lagerreihen 3a, 3b und 3c ausgebildet. Entlang einer durch die Klemmkörperfreilaufeinheit 3 definierten Drehachse D und einer hierzu parallel verlaufenden Achsrichtung X liegen diese drei Lagerreihen 3a, 3b und 3c nebeneinander vor.

Die ersten beiden Lagerreihen 3a und 3b, die ausgehend von einer ersten axialen Stirnseite 30 entlang der Achsrichtung X aufeinander folgen, weisen jeweils ausschließlich Klemmkörper 5 auf. Diese Klemmkörper 5 sind entlang einer Umfangsrichtung U um die Drehachse D nebeneinander in definierten Abständen zueinander gehalten und um eine zu der Drehachse D parallele Kippachse kippbar gelagert. Derart können die Klemmkörper 5 je nach Drehrichtung einer inneren Welle und äußeren Welle, die über die Klemmkörperfreilaufeinheit 3 miteinander gekoppelt sind, und einer hiervon abhängigen Kipplage ein Drehmoment zwischen der inneren Welle und der äußeren Wellen übertragen oder eine Drehung der inneren Welle und der äußeren Wellen relativ zueinander ermöglichen. Für die Verbindung mit einer inneren Welle weist die Klemmkörperfreilaufeinheit 3 eine zentrale Lageröffnung O auf, in die die innere Welle eingreifen kann, insbesondere eingepresst werden kann. Eine äußere Welle kann wiederum radial außen mit der Klemmkörperfreilaufeinheit 3 verbunden werden, indem beispielsweise die Klemmkörperfreilaufeinheit 3 an einen hohlen Endabschnitt der äußeren Welle ein gesteckt wird oder umgekehrt die zumindest an ihrem einen Ende hohle (Hohl-)Welle auf die Klemmkörperfreilaufeinheit 3 aufgesteckt, insbesondere aufgepresst wird.

Die zwei Lagerreihen 3a und 3b der Klemmkörperfreilaufeinheit 3 der Figur 1, die die Klemmkörper 5 aufweisen, sind um eine dritte Lagereihe 3c ergänzt, die ausschließlich Wälzkörper in Form von Zylinderrollen 6 aufweist. über die Zylinderrollen 6 können die inneren und äußeren Wellen (zusätzlich) relativ zueinander drehbar gelagert werden, wenn die inneren und äußeren Wellen über die Klemmkörperfreilaufeinheit 3 miteinander gekoppelt sind. Die Zylinderrollen 6 sind hierbei in Käfigaufnahmen 356 in einem definierten Abstand entlang der Umfangsrichtung U zueinander gehalten, die von ein und demselben Käfig 35 ausgebildet werden, der auch Käfigsaufnahmen 355 für die Klemmkörper 5 der beiden anderen Lagerreihen 3a und 3b ausbildet. Der Käfig 35 der Klemmkörperfreilaufeinheit 3 der Figur 1 integriert somit Käfigaufnahmen 355 und 356 sowohl für die Klemmkörper 5 als auch für die Zylinderrollen 6.

Für die räumliche Trennung der Zylinderrollen 6 der Lagerreihe 3c von einer benachbarten Lagerreihe 3b mit Klemmkörpern 5 bildet der Käfig 35 einen radial nach außen vorstehenden und ringförmig umlaufenden Steg 350 aus.

Grundsätzlich können die Klemmkörper 5 der zwei ersten Lagerreihen 3a und 3b voneinander vollständig getrennt ausgeführt werden. In der darstellten Ausführungsvariante der Figur 1 sind die Klemmkörper 5 der zwei ersten benachbarten Lagerreihen 3a und 3b demgegenüber einstückig miteinander ausgebildet. Konstruktiv weist die Klemmkörperfreilaufeinheit 3 der Figur 1 somit eine einzelne Wälzkörperreihe 3c und eine axial benachbart hierzu liegende einzelne Klemmkörperreihe 3a, 3b auf.

So weisen die Klemmkörper 5 an einer radial innen liegenden Seite eine gemeinsame Basis 50 auf und sind durch einen um die Drehachse D umlaufenden Schlitz an einer radial außen liegenden Seite lokal voneinander separiert. In diesem umfangsseitig umlaufenden Schlitz und damit zwischen den beiden Lagerreihen 3a, 3b ist eine Ringfeder 7 für die Anlage an der äußeren Welle angeordnet. Durch den über den Umfang umlaufenden Schlitz sind die zwei Lagerreihen 3a, 3b gebildet, die letztlich Teil genau einer Reihe von in Umfangsrichtung hintereinander liegender Klemmkörper 5 einer Klemmkörperreihe 3a, 3b sind. Derart ist zwischen an einer äußeren Welle jeweils anliegenden Abschnitten einer radial äußeren Mantelfläche der Klemmkörper 5 ein durch den Schlitz definierter axialer Abstand vorgegeben. Gleichzeitig übertragen die Klemmköper 5 beider Lagerreihen 3a, 3b über die gemeinsame Basis 50 Kräfte an die innere Welle.

Die drei Lagerreihen 3a, 3b und 3c befinden sich zwischen zwei axialen Stirnseiten 30 und 31 des Käfigs 35. An einer dieser Stirnseiten 30, 31 - in der Figur 1 der links gezeigten Stirnseite 31 - ist eine ringförmige Dichtung 4 mit einer Dichtlippe angespritzt. Derart kann mit dem Einbau der Klemmkörperfreilaufeinheit 3 auch eine axiale und/oder radiale Dichtung bereitgestellt werden.

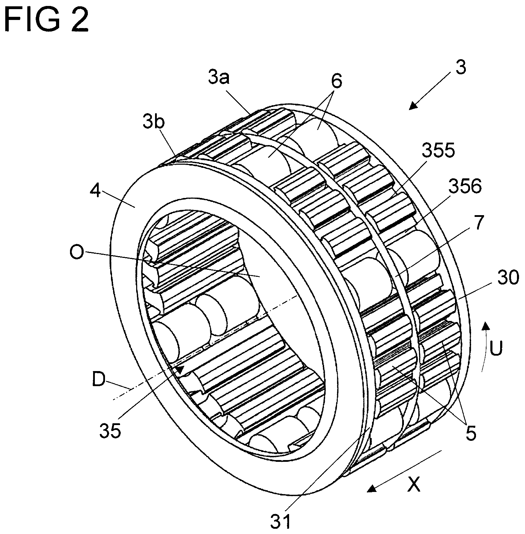

Bei der weiteren Ausführungsvariante der Figur 2 sieht eine Klemmkörperfreilaufeinheit 3 gemischte Lagerreihen 3a und 3b innerhalb einer einzelnen Klemmkörperreihe vor. Zwischen den Lagerreihen 3a und 3b ist auch hier eine Ringfeder 7 vorgesehen. Ferner sind die Klemmkörper 5 und die Zylinderrollen 6 an einem gemeinsamen Käfig 35 der Klemmkörperfreilaufeinheit 3 gehalten. An einer Stirnseite 31 ist auch an diesem Käfig 35 eine Dichtung 4 angespritzt.

Im Unterschied zu der Klemmkörperfreilaufeinheit der Figur 1 ist die Klemmkörperfreilaufeinheit 3 der Figur 2 zweireihig und mit gemischten Lagereihen 3a und 3b aufgebildet, bei denen entlang der Umfangsrichtung U um die Drehachse D sowohl Klemmkörper 5 als auch Zylinderrollen 6 vorgesehen sind. In jeder Lagereihe 3a, 3b sind somit zusätzlich zu den Klemmrollen 5 Zylinderrollen 6 an dem Käfig 35 angeordnet sind. Der Käfig 35 bildet somit für jede Lagerreihe 3a und 3b nicht nur Käfigaufnahmen 355 für Klemmkörper 5, sondern auch Käfigaufnahmen 356 für Zylinderrollen 6 aus. Bei der Ausführungsvariante der Figur 2 folgt dabei in jeder Lagerreihe 3a, 3b auf mehrere Klemmkörper 5 (hier jeweils drei) wiederholt jeweils genau eine Zylinderrolle 6.

Sowohl bei der Ausführungsvariante der Figur 1 als auch bei der Ausführungsvariante der Figur 2 kann vorgesehen sein, dass die Klemmkörper 5 innenseitig zwei Lagerreihen 3a und 3b überspannen, während sie außenseitig über einen Spalt separiert sind, in den die Ringfeder 7 eingesetzt ist.

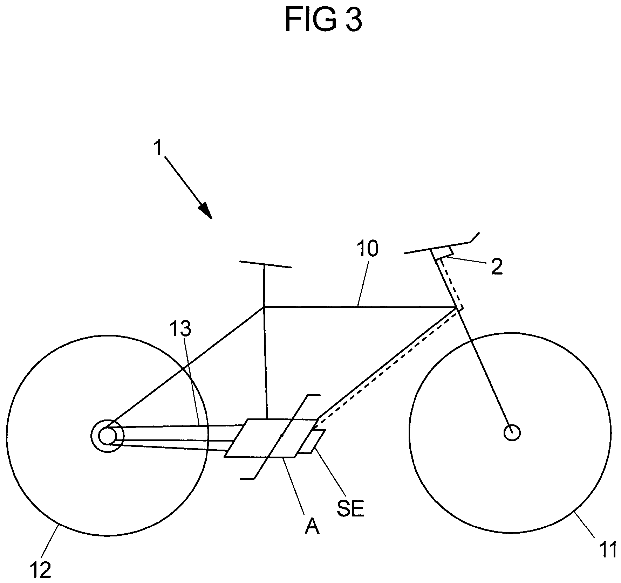

Die Klemmkörperfreilaufeinheiten 3 der Figuren 1 und 2 sind beispielsweise für die Verwendung in einer elektromotorischen Antriebsvorrichtung A eines Elektrofahrrades 1 entsprechend der Figur 3 vorgesehen. Diese elektromotorische Antriebsvorrichtung A gestattet - gesteuert mithilfe einer antriebsseitigen Steuerelektronik SE und einer Bedieneinheit 2, die zum Beispiel an einem Lenker des Elektrofahrrads angeordnet ist - eine elektromotorische Unterstützung des Elektrofahrrads 1. Hierbei sind an einem Rahmen 10 des Elektrofahrrads 1 (im vorderen Bereich an einer hieran angelenkten Gabel) ein Vorderrad 11 und ein Hinterrad 12 drehbar gelagert, wobei das Hinterrad 12 über ein Kraftübertragungsglied z.B. in Form einer Kette oder eines Riemens 13 über die elektromotorische Antriebsvorrichtung A antreibbar ist.

Über mindestens einen Elektromotor der Antriebsvorrichtung A wird - typischerweise in Zusammenspiel mit einem Getriebe der Antriebsvorrichtung A - ein Antriebsmoment an eine Abtriebswelle zu übertragen, die mit der Kette oder dem Riemen 13 verbunden ist. Die Abtriebswelle, bei der sich insbesondere um die Tretlagerwelle des Elektrofahrrades 1 handeln kann, bildet hierbei eine innere oder äußere Welle an einer Klemmkörperfreilaufeinheit 3, die über die Klemmkörperfreilaufeinheit 3 mit einer antreibenden Welle der elektromotorischen Antriebsvorrichtung A gekoppelt ist. Über die Klemmkörperfreilaufeinheit 3 wird hierbei ermöglicht, dass einem an der Abtriebswelle muskelkraftbetätigt erzeugten Drehmoment die elektromotorische Antriebsvorrichtung A bei Inaktivität nicht entgegenwirkt, gleichzeitig aber ein motorisch erzeugtes Drehmoment an das Hinterrad 12 übertragbar ist. Hierbei ist über die Anordnung der Zylinderrollen 6 axial neben den Klemmkörpern 5 (wie bei der Ausführungsvariante der Figur 1) oder zwischen den Klemmkörpern 5 (wie bei der Ausführungsvariante der Figur 2) an einem gemeinsamen Käfig 35 eine robuste und kompakte Bauform für die Integration eines entsprechenden Klemmkörperfreilaufs ermöglicht.

### Bezugszeichenliste

- 1: Elektrofahrrad
- 10: Rahmen
- 11: Vorderrad
- 12: Hinterrad
- 13: Kette / Riemen (Kraftübertragungsglied)
- 2: Bedieneinheit
- 3: Klemmkörperfreilaufeinheit
- 30, 31: Stirnseite
- 35: Käfig
- 350: Steg
- 355: Käfigaufnahme
- 356: Käfigaufnahme
- 3a, 3b, 3c: Lagerreihe
- 4: Dichtung
- 5: Klemmköper
- 50: Basis
- 6: Zylinderrolle (Wälzkörper)
- 7: Ringfeder
- A: Antriebsvorrichtung
- D: Drehachse
- O: Lageröffnung
- SE: Steuerelektronik
- U: Umfangsrichtung
- X: Achsrichtung

## Patentansprüche

1. Klemmkörperfreilaufeinheit, mit
- mehreren Klemmkörpern (5), über die eine Kraftübertragung zwischen einer inneren Welle und einer äußeren Welle, die über die Klemmkörperfreilaufeinheit (3) miteinander gekoppelt werden können, nur in einer von zwei zueinander entgegensetzten Drehrichtungen ermöglicht ist,
- einem Käfig (35), über den die mehreren Klemmkörper (5) der Klemmkörperfreilaufeinheit (3) entlang einer Umfangsrichtung (U) in einem definierten Abstand zueinander gehalten werden, und
- mehrere Wälzkörper (6), über die die inneren und äußeren Wellen relativ zueinander drehbar gelagert werden, wenn die inneren und äußeren Wellen über die Klemmkörperfreilaufeinheit (3) miteinander gekoppelt sind,
wobei zumindest ein Teil der mehreren Wälzkörper (6) und die Klemmkörper (5) gemeinsam an dem einen Käfig (35) gehalten sind,
wobei die Klemmkörperfreilaufeinheit (3) drei Lagerreihen (3a-3c) umfasst, die entlang einer durch die Klemmkörperfreilaufeinheit (3) definierten Drehachse (D) für die inneren und äußeren Wellen nebeneinander liegen, und
wobei von den drei Lagerreihen (3a-3c) zwei Lagerreihen (3a, 3b) jeweils mehrere Klemmkörper (5) aufweisen und eine Lagerreihe (3c) ausschließlich mehrere Wälzkörper (6) aufweist,
**dadurch gekennzeichnet, dass**
die Klemmkörper (5) zweier benachbarter Lagerreihen (3a, 3b) miteinander verbunden, insbesondere einstückig miteinander ausgebildet und durch einen um die Drehachse (D) umlaufenden Schlitz an einer radial außen liegenden Seite lokal voneinander separiert sind.

2. Klemmkörperfreilaufeinheit nach Anspruch 1, **dadurch gekennzeichnet, dass** mehrere Wälzkörper (6) in einer sich entlang der Umfangsrichtung (U) erstreckenden ersten Lagerreihe (3c) der Klemmkörperfreilaufeinheit (3) angeordnet sind, die zu einer zweiten Lagerreihe (3a, 3b) der Klemmkörperfreilaufeinheit (3) mit mehreren Klemmkörpern (5) parallel verläuft.

3. Klemmkörperfreilaufeinheit nach Anspruch 1 oder 2, **dadurch gekennzeichnet, dass** mehrere Wälzkörper (6) in einer sich entlang der Umfangsrichtung (U) erstreckenden Lagerreihe (3a, 3b) der Klemmkörperfreilaufeinheit (3) zusammen mit mehreren Klemmkörpern (5) angeordnet sind.

4. Klemmkörperfreilaufeinheit nach Anspruch 3, **dadurch gekennzeichnet, dass** in der Lagerreihe (3a, 3b) mit mehreren Wälzkörpern (6) und mehreren Klemmkörpern (5) mindestens zwei Klemmkörper (5) entlang der Umfangsrichtung (U) aufeinander folgen, bevor in der Umfangsrichtung (U) wenigstens ein Wälzkörper (6) auf einen der mindestens zwei Klemmkörper (5) folgt.

5. Klemmkörperfreilaufeinheit nach einem der vorhergehenden Ansprüche, **dadurch gekennzeichnet, dass** die Klemmkörperfreilaufeinheit (3) mindestens zwei jeweils mehrere Klemmkörper (5) aufweisende Lagerreihen (3a, 3b) umfasst, die parallel zueinander verlaufen.

6. Klemmkörperfreilaufeinheit nach einem der vorhergehenden Ansprüche, **dadurch gekennzeichnet, dass** die Klemmkörperfreilaufeinheit (3) mindestens zwei jeweils mehrere Klemmkörper (5) aufweisende Lagerreihen (3a, 3b) umfasst, die entlang einer durch die Klemmkörperfreilaufeinheit (3) definierten Drehachse (D) für die inneren und äußeren Wellen nebeneinander liegen.

7. Klemmkörperfreilaufeinheit nach einem der vorhergehenden Ansprüche, **dadurch gekennzeichnet, dass** zwischen einer der Lagerreihen (3a, 3b) mit mehreren Klemmkörpern (5) und der ausschließlich mehrere Wälzkörper (6) aufweisenden Lagerreihe (3c) ein sich bezüglich der Drehachse (D) radial nach außen erstreckender Steg (350) an dem Käfig (35) ausgebildet ist.

8. Klemmkörperfreilaufeinheit nach einem der vorhergehenden Ansprüche, **dadurch gekennzeichnet, dass** eine oder mehrere Lagerreihen (3a, 3b) der Klemmkörperfreilaufeinheit (3) durch eine Klemmkörperreihe gebildet sind, die in Umfangsrichtung (U) aufeinander folgende Klemmkörper (5) aufweist, die jeweils an einer radial außen liegenden Seite geschlitzt sind.

9. Klemmkörperfreilaufeinheit nach einem der vorhergehenden Ansprüche, **dadurch gekennzeichnet, dass** an dem Käfig (35) mindestens eine Dichtung (4) vorgesehen ist, insbesondere anspritzt ist.

10. Klemmkörperfreilaufeinheit nach Anspruch9, **dadurch gekennzeichnet, dass** die Dichtung (4) an einem, bezüglich einer durch die Klemmkörperfreilaufeinheit (3) definierten Drehachse (D), axialen Stirnseite (31) des Käfigs (35) vorgesehen ist.

11. Klemmkörperfreilaufeinheit nach einem der vorhergehenden Ansprüche, **dadurch gekennzeichnet, dass** zumindest ein Teil der Wälzkörper als Zylinderrollen (6) ausgebildet ist.

12. Antriebsvorrichtung für ein Elektrofahrrad (1), mit mindestens einer Klemmkörperfreilaufeinheit (3) nach einem der vorhergehenden Ansprüche.

13. Antriebsvorrichtung nach Anspruch12, **dadurch gekennzeichnet, dass** die Antriebsvorrichtung (A) mindestens einen Antriebsmotor und ein Getriebe umfasst, um ein von dem mindestens einen Antriebsmotor erzeugtes Antriebsmoment an eine Abtriebswelle zu übertragen, und der mindestens eine Antriebsmotor und das Getriebe und/oder das Getriebe und die Abtriebswelle über die Klemmkörperfreilaufeinheit (3) voneinander entkoppelbar sind.

14. Elektrofahrrad mit mindestens einer Klemmkörperfreilaufeinheit nach einem der Ansprüche 1 bis 11 und/oder mit einer Antriebsvorrichtung (A) nach Anspruch 12 oder 13.

## Claims

1. Clamping body freewheel unit, having
- a plurality of clamping bodies (5), via which a force transmission between an internal shaft and an external shaft, which can be coupled to each other via the clamping body freewheel unit (3), is enabled only in one of two mutually opposing rotation directions,
- a cage (35), via which the plurality of clamping bodies (5) of the clamping body freewheel unit (3) are retained at a defined spacing relative to each other in a circumferential direction (U), and
- a plurality of rolling bodies (6), via which the internal shaft and external shaft are supported so as to be rotatable relative to each other if the internal shaft and external shaft are coupled to each other via the clamping body freewheel unit (3),
wherein at least some of the plurality of rolling bodies (6) and the clamping bodies (5) are retained together on the one cage (35),
wherein the clamping body freewheel unit (3) comprises three bearing rows (3a-3c) which are located beside each other along a rotation axis (D) which is defined by the clamping body freewheel unit (3) for the internal shaft and external shaft, and
wherein, of the three bearing rows (3a-3c), two bearing rows (3a, 3b) each have a plurality of clamping bodies (5) and one bearing row (3c) has exclusively a plurality of rolling bodies (6),
**characterized in that**
the clamping bodies (5) of two adjacent bearing rows (3a, 3b) are connected to each other, particularly constructed integrally with each other, and are separated from each other locally by a slot which extends about the rotation axis (D) at a radially external side.

2. Clamping body freewheel unit according to Claim 1, **characterized in that** a plurality of rolling bodies (6) are arranged in a first bearing row (3c) of the clamping body freewheel unit (3), which row extends in the circumferential direction (U) and extends parallel with a second bearing row (3a, 3b) of the clamping body freewheel unit (3) with a plurality of clamping bodies (5).

3. Clamping body freewheel unit according to Claim 1 or 2, **characterized in that** a plurality of rolling bodies (6) are arranged together with a plurality of clamping bodies (5) in a bearing row (3a, 3b), which extends in the circumferential direction (U), of the clamping body freewheel unit (3).

4. Clamping body freewheel unit according to Claim 3, **characterized in that** at least two clamping bodies (5) follow each other in the circumferential direction (U) in the bearing row (3a, 3b) with a plurality of rolling bodies (6) and a plurality of clamping bodies (5) before at least one rolling body (6) follows one of the at least two clamping bodies (5) in the circumferential direction (U).

5. Clamping body freewheel unit according to any one of the preceding claims, **characterized in that** the clamping body freewheel unit (3) comprises at least two bearing rows (3a, 3b) which each have a plurality of clamping bodies (5) and which extend parallel with each other.

6. Clamping body freewheel unit according to any one of the preceding claims, **characterized in that** the clamping body freewheel unit (3) comprises at least two bearing rows (3a, 3b) which each have a plurality of clamping bodies (5) and which are located beside each other along a rotation axis (D) which is defined by the clamping body freewheel unit (3) for the internal shaft and external shaft.

7. Clamping body freewheel unit according to any one of the preceding claims, **characterized in that**, between one of the bearing rows (3a, 3b) with a plurality of clamping bodies (5) and the bearing row (3c) having exclusively a plurality of rolling bodies (6), a web (350) which extends radially outwardly with respect to the rotation axis (D) is formed on the cage (35).

8. Clamping body freewheel unit according to any one of the preceding claims, **characterized in that** one or more bearing rows (3a, 3b) of the clamping body freewheel unit (3) are formed by a clamping body row which has clamping bodies (5) which follow each other in a circumferential direction (U) and which are each slotted at a radially external side.

9. Clamping body freewheel unit according to any one of the preceding claims, **characterized in that** at least one seal (4) is provided on the cage (35), in particular injection-moulded thereon.

10. Clamping body freewheel unit according to Claim 9, **characterized in that** the seal (4) is provided at an axial front side (31) of the cage (35) with respect to a rotation axis (D) defined by the clamping body freewheel unit (3).

11. Clamping body freewheel unit according to any one of the preceding claims, **characterized in that** at least some of the rolling bodies are in the form of cylinder rollers (6).

12. Drive apparatus for an electric bicycle (1), having at least one clamping body freewheel unit (3) according to any one of the preceding claims.

13. Drive apparatus according to Claim 12, **characterized in that** the drive apparatus (A) comprises at least one drive motor and a gear mechanism in order to transmit a drive torque, generated by the at least one drive motor, to an output shaft, and the at least one drive motor and the gear mechanism and/or the gear mechanism and the output shaft can be uncoupled from each other via the clamping body freewheel unit (3).

14. Electric bicycle having at least one clamping body freewheel unit according to any one of Claims 1 to 11 and/or having a drive apparatus (A) according to Claim 12 or 13.

## Revendications

1. Unité de roue libre de corps de serrage avec
- plusieurs corps de serrage (5), par lesquels une transmission de force entre un arbre intérieur et un arbre extérieur, qui peuvent être couplés l'un à l'autre par l'unité de roue libre (3) de corps de serrage, n'est possible que dans une de deux directions de rotations opposées l'une à l'autre,
- une cage (35), par laquelle les plusieurs corps de serrage (5) de l'unité de roue libre (3) de corps de serrage sont maintenus à une distance définie les uns par rapport aux autres le long d'une direction périphérique (U), et
- plusieurs corps de roulement (6), par lesquels les arbres intérieurs et extérieurs sont montés de manière à pouvoir tourner les uns par rapport aux autres lorsque les arbres intérieurs et extérieurs sont couplés les uns aux autres par l'unité de roue libre (3) de corps de serrage,
au moins une partie des plusieurs corps de roulement (6) et les corps de serrage (5) étant maintenus conjointement sur la cage (35),
l'unité de roue libre (3) de corps de serrage comprenant trois rangées de paliers (3a - 3c), qui se trouvent côte à côte le long d'un axe de rotation (D) défini par l'unité de roue libre (3) de corps de serrage pour les arbres intérieurs et extérieurs, et
des trois rangées de paliers (3a - 3c), deux rangées de paliers (3a, 3b) comportant chacune plusieurs corps de serrage (5) et une rangée de palier (3c) comportant exclusivement plusieurs corps de roulement (6),
**caractérisée en ce que**
les corps de serrage (5) de deux rangées de paliers (3a, 3b) adjacentes sont reliés les uns aux autres, en particulier sont formés d'un seul tenant et sont séparés les uns des autres localement sur un côté radialement extérieur par une entaille s'étendant tout autour de l'axe de rotation (D).

2. Unité de roue libre de corps de serrage selon la revendication 1, **caractérisée en ce que** plusieurs corps de roulement (6) sont disposés dans une première rangée de paliers (3c) de l'unité de roue libre (3) de corps de serrage s'étendant le long de la direction périphérique (U), qui s'étend parallèlement à une deuxième rangée de paliers (3a, 3b) de l'unité de roue libre (3) de corps de serrage avec plusieurs corps de serrage (5).

3. Unité de roue libre de corps de serrage selon la revendication 1 ou 2, **caractérisée en ce que** plusieurs corps de roulement (6) sont disposés conjointement avec plusieurs corps de serrage (5) dans une rangée de paliers (3a, 3b) de l'unité de roue libre (3) de corps de serrage s'étendant le long de la direction périphérique (U).

4. Unité de roue libre de corps de serrage selon la revendication 3, **caractérisée en ce que** dans la rangée de paliers (3a, 3b) avec plusieurs corps de roulement (6) et plusieurs corps de serrage (5), au moins deux corps de serrage (5) se suivent l'un l'autre le long de la direction périphérique (U) avant qu'au moins un corps de roulement (6) ne suive, dans la direction périphérique (U), un des au moins deux corps de serrage (5).

5. Unité de roue libre de corps de serrage selon l'une des revendications précédentes, **caractérisée en ce que** l'unité de roue libre (3) de corps de serrage comprend au moins deux rangées de paliers (3a, 3b) comportant chacune plusieurs corps de serrage (5), qui s'étendent parallèlement l'une à l'autre.

6. Unité de roue libre de corps de serrage selon l'une des revendications précédentes, **caractérisée en ce que** l'unité de roue libre (3) de corps de serrage comprend au moins deux rangées de paliers (3a, 3b) comportant chacune plusieurs corps de serrage (5), qui se trouvent côte à côte le long d'un axe de rotation (D) défini par l'unité de roue libre (3) de corps de serrage pour les arbres intérieurs et extérieurs.

7. Unité de roue libre de corps de serrage selon l'une des revendications précédentes, **caractérisée en ce qu'**une nervure (350) s'étendant radialement vers l'extérieur par rapport à l'axe de rotation (D) est formée sur la cage (35) entre une des rangées de paliers (3a, 3b) avec plusieurs corps de serrage (5) et la rangée de paliers (3c) comportant exclusivement plusieurs corps de roulement (6).

8. Unité de roue libre de corps de serrage selon l'une des revendications précédentes, **caractérisée en ce qu'**une ou plusieurs rangées de paliers (3a, 3b) de l'unité de roue libre (3) de corps de serrage sont formées par une rangée de corps de serrage, qui comporte des corps de serrage (5) se suivant les uns les autres dans la direction périphérique (U), qui sont entaillés respectivement sur un côté radialement extérieur.

9. Unité de roue libre de corps de serrage selon l'une des revendications précédentes, **caractérisée en ce qu'**au moins un joint d'étanchéité (4) est prévu, en particulier est moulé par injection, sur la cage (35).

10. Unité de roue libre de corps de serrage selon la revendication 9, **caractérisée en ce que** le joint d'étanchéité (4) est prévu sur un côté frontal (31) axial, par rapport à un axe de rotation (D) défini par l'unité de roue libre de serrage (3), de la cage (35).

11. Unité de roue libre de corps de serrage selon l'une des revendications précédentes, **caractérisée en ce qu'**au moins une partie des corps de roulement est formée en tant que rouleaux cylindriques (6).

12. Dispositif d'entraînement pour une bicyclette électrique (1), avec au moins une unité de roue libre (3) de corps de serrage selon l'une des revendications précédentes.

13. Dispositif d'entraînement selon la revendication 12, **caractérisé en ce que** le dispositif d'entraînement (A) comprend au moins un moteur d'entraînement et une transmission pour transmettre un couple d'entraînement généré par l'au moins un moteur d'entraînement à un arbre de sortie, et l'au moins un moteur d'entraînement et la transmission et/ou la transmission et l'arbre de sortie peuvent être découplés l'un de l'autre par l'unité de roue libre (3) de corps de serrage.

14. Bicyclette électrique avec au moins une unité de roue libre de corps de serrage selon l'une des revendications 1 à 11 et/ou avec un dispositif d'entraînement (A) selon la revendication 12 ou 13.
